# EUROPEAN PATENT SPECIFICATION

(11) **EP 4 184 609 B1**
(45) Date of publication and mention of the grant of the patent: **03.12.2025**
(21) Application number: 21915794.8
(22) Date of filing: 28.12.2021
(51) Int. Cl.: H01M 4/133, H01M 4/587, H01M 4/62, H01M 4/1393, H01M 4/04, H01M 10/0525, H01M 4/02, H01M 4/13, H01M 4/139, H01M 4/36, H01M 4/583, H01M 10/052

(54) **NEGATIVE ELECTRODE AND METHOD FOR MANUFACTURING SAME**
NEGATIVELEKTRODE UND VERFAHREN ZUR HERSTELLUNG DAVON
ÉLECTRODE NÉGATIVE ET SON PROCÉDÉ DE FABRICATION

(30) Priority: 28.12.2020 KR 20200185311
(43) Date of publication of application: 24.05.2023
(73) Proprietor: LG Energy Solution, Ltd., Seoul 07335 (KR)
(72) Inventor: LEE, Chang-Ju, Daejeon 34122 (KR); LEE, Yong-Ju, Daejeon 34122 (KR); WOO, Sang-Wook, Daejeon 34122 (KR)
(74) Representative: Hoffmann Eitle
(86) International application number: PCT/KR2021/020088
(87) International publication number: WO 2022/145996

(56) References cited:
- WO-A1-2020/137321
- CN-A- 104 425 825
- CN-A- 104 425 825
- CN-A- 110 931 748
- CN-A- 112 018 328
- JP-A- 2020 087 653
- KR-A- 20130 116 027
- KR-A- 20190 117 387
- KR-A- 20190 117 387
- US-A1- 2014 065 479

## Description

### TECHNICAL FIELD

The present disclosure relates to a negative electrode having improved quick charging performance, while ensuring adhesion, and a method for manufacturing the same.

### BACKGROUND ART

As technical development and needs for mobile instruments have been increased, secondary batteries that is rechargeable and can be downsized and provided with high capacity have been increasingly in demand. In addition, among such secondary batteries, lithium secondary batteries having high energy density and operating voltage have been commercialized and used widely.

A lithium secondary battery has a structure including an electrode assembly having a positive electrode and a negative electrode, each of which includes an active material coated on an electrode current collector, and a porous separator interposed between both electrodes; and a lithium salt-containing electrolyte injected to the electrode assembly. The electrode is obtained by applying a slurry including an active material, a binder and a conductive material dispersed in a solvent to a current collector, followed by drying and pressing.

In general, a secondary battery includes a positive electrode, a negative electrode, an electrolyte and a separator. The negative electrode includes a negative electrode active material capable of intercalation/deintercalation of lithium ions released from the positive electrode. For example, a graphite-based active material, such as a natural graphite or an artificial graphite, may be used as a negative electrode active material.

An artificial graphite is used frequently in the form of secondary particles. For this purpose, in general, cokes as a raw material of primary particles are granulated to form secondary particles, and then graphitization is carried out through heat treatment to provide artificial graphite in the form of secondary particles.

However, when using such a conventional process in which the size of primary particles is not controlled, non-granulated micropowder or micropowder separated from the secondary particles even after the granulation is generated in a large amount. Therefore, the resultant negative electrode shows reduced negative electrode adhesion (resistance against detachment of the negative active material particles from the negative electrode), and the battery may provide poor high-temperature storage performance. In addition, since the secondary particles include micropowder, the negative electrode has non-uniform pores and shows increased pore resistance, resulting in degradation of the quick charging performance of a battery.

According to the related art, there has been used a process for forming a carbon coating layer on the secondary particles in order to solve the above-mentioned problems. However, when using such a carbon coating layer alone, it is difficult to inhibit detachment of the micropowder, and thus it is not possible to obtain a sufficient effect. **In** addition, even when the detachment is inhibited, the micropowder present in the secondary particles cannot be removed, thereby making it difficult to improve the quick charging performance of a battery. Further, the content of pitch used for a granulation process or the content of a carbon precursor required for forming a carbon coating layer should be increased to solve the problems caused by an excessive amount of micropowder, and thus the resultant negative electrode shows a decrease in capacity per weight.

Meanwhile, in the case of commercially available batteries, each of the negative electrode and the positive electrode is formed by coating each electrode slurry on each electrode current collector once. In this case, when the binder distribution in the section of the electrode layer is determined, the binder content is high in the vicinity of the surface but is reduced toward the current collector.

The negative electrode shows reduced adhesion due to a decrease in binder content in the vicinity of the current collector. Thus, when the binder content is increased to improve the problem of degradation of adhesion, the negative electrode shows increased resistance, resulting in the problem of degradation quick charging performance.

Under these circumstances, there is a need for a novel attempt to improve adhesion between the active material layer of the negative electrode and the current collector, while providing a battery with improved quick charging performance.

KR 10-2019-0117387 A concerns an electrode including an electrode active material, wherein the electrode active material layer includes an electrode active material, polyvinylidene fluoride, and a conductive agent, wherein the conductive agent includes a carbon nanotube structure in which 2 to 5,000 single-walled carbon nanotube units are bonded to each other, and the carbon nanotube structure is included in an amount of 0.01 wt% to 0.5 wt% in the electrode active material layer.

WO 2020/137321 A1 concerns negative electrode comprising: a negative electrode collector; and a negative-electrode mixed material layer that is formed atop the negative electrode collector, wherein the negative-electrode mixed material layer includes: a first layer which contains a first carbon-based active material, a silicon-based active material, a polyacrylic acid, or a salt thereof, the first layer being formed atop the negative electrode collector; and a second layer having a tap density greater than that of the first carbon-based active material and a BET specific surface area smaller than that of the first carbon-based active material, the second layer being formed atop the first layer.

### DISCLOSURE

### Technical Problem

The present disclosure is designed to solve the problems of the related art, and therefore the present disclosure is directed to providing a negative electrode providing improved quick charging performance, while ensuring adhesion, and a method for manufacturing the negative electrode.

The present disclosure is also directed to providing a lithium secondary battery including the negative electrode.

### Technical Solution

In one aspect of the present disclosure, there is provided a negative electrode according to any one of the following embodiments.

According to the first embodiment, there is provided a negative electrode, including:
a current collector; and
a negative electrode active material layer disposed on at least one surface of the current collector, and having a negative electrode active material layer containing an artificial graphite, single-walled carbon nanotubes (SWCNTs) and a binder polymer,
wherein the negative electrode active material layer includes a lower layer region facing the current collector, and an upper layer region facing the lower layer region and extended to the surface of the negative electrode active material layer,
the content of the single-walled carbon nanotubes is 0.003-0.07 parts by weight based on 100 parts by weight of the lower layer region,
the single-walled carbon nanotubes have an average diameter of 0.5-15 nm,
the upper layer region includes no single-walled carbon nanotubes (SWCNT), and
wherein at least one of the lower layer region and the upper layer region further includes a spheronized natural graphite.

According to the second embodiment, there is provided the negative electrode as defined in the first embodiment, wherein the content of the single-walled carbon nanotubes is 0.005-0.045 parts by weight based on 100 parts by weight of the lower layer region.

According to the third embodiment, there is provided the negative electrode as defined in the first or the second embodiment, wherein the single-walled carbon nanotubes have an average diameter of 1-10 nm.

According to the fourth embodiment, there is provided the negative electrode as defined in any one of the first to the fourth embodiments, wherein at least one of the lower layer region and the upper layer region further includes any conductive material other than single-walled carbon nanotubes.

According to the fifth embodiment, there is provided a method for manufacturing the negative electrode as defined in the first embodiment, the method including the steps of:
preparing a slurry for a lower layer containing an artificial graphite, a first binder polymer, single-walled carbon nanotubes and a first dispersion medium, and a slurry for an upper layer containing an artificial graphite, a second binder polymer and a second dispersion medium and including no single-walled carbon nanotubes (SWCNTs);
coating the slurry for a lower layer on one surface of a negative electrode current collector, and coating the slurry for an upper layer on the slurry for a lower layer, at the same time or with a predetermined time interval; and
drying the coated slurry for a lower layer and slurry for an upper layer at the same time to form an active material layer,
wherein the content of the single-walled carbon nanotubes is 0.003-0.07 parts by weight based on 100 parts by weight of the lower layer region, and the single-walled carbon nanotubes have an average diameter of 0.5-15 nm.

According to the sixth embodiment, there is provided the method for manufacturing the negative electrode as defined in the sixth embodiment, wherein the content of the single-walled carbon nanotubes is 0.005-0.045 parts by weight based on 100 parts by weight of the lower layer region.

According to the seventh embodiment, there is provided the method for manufacturing the negative electrode as defined in the sixth or the seventh embodiment, wherein the single-walled carbon nanotubes have an average diameter of 1-10 nm.

According to the eighth embodiment, there is provided the method for manufacturing the negative electrode as defined in any one of the sixth to the eighth embodiments, wherein the slurry for a lower layer is coated on one surface of the negative electrode current collector, and the slurry for an upper layer is coated on the slurry for a lower layer, at the same time or with a time interval of 0.6 seconds or less.

According to the ninth embodiment, there is provided a lithium secondary battery including the negative electrode as defined in any one of the first to the fifth embodiments.

### Advantageous Effects

According to an embodiment of the present disclosure, since carbon nanotubes are used merely in the lower layer region of the negative electrode active material layer, the binder polymer of the lower layer region is inhibited from being migrated to the surface, and thus the adhesion of the negative electrode active material layer to the current collector may be improved significantly, even when using a small amount of binder polymer. In addition, the negative electrode according to an embodiment of the present disclosure may include a relatively small amount of binder polymer, and the upper layer region of the negative electrode active material layer includes no single-walled carbon nanotubes. Therefore, it is possible to prevent an increase in pore resistance caused by inhibition of lithium-ion diffusion due to the single-walled carbon nanotubes entangled among the active material particles. As a result, the secondary battery using the negative electrode may provide significantly improved quick charging performance.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a negative electrode, including:
a current collector; and
a negative electrode active material layer disposed on at least one surface of the current collector, and having a negative electrode active material layer containing an artificial graphite, single-walled carbon nanotubes (SWCNTs) and a binder polymer,
wherein the negative electrode active material layer includes a lower layer region facing the current collector, and an upper layer region facing the lower layer region and extended to the surface of the negative electrode active material layer,
the content of the single-walled carbon nanotubes is 0.003-0.07 parts by weight based on 100 parts by weight of the lower layer region,
the single-walled carbon nanotubes have an average diameter of 0.5-15 nm,
the upper layer region includes no single-walled carbon nanotubes (SWCNTs), and
wherein at least one of the lower layer region and the upper layer region further includes a spheronized natural graphite.

Herein, in general, an artificial graphite may be prepared by carbonizing a raw material, such as coal tar, coal tar pitch, petroleum-based heavy oil, or the like, at a temperature of 2,500°C or higher. After such graphitization, the resultant product is subjected to particle size adjustment, such as pulverization and secondary particle formation, so that it may be used as a negative electrode active material. An artificial graphite includes crystals distributed randomly in particles, has a lower sphericity as compared to a natural graphite and a slightly sharp shape.

The artificial graphite used according to an embodiment of the present disclosure includes commercially available mesophase carbon microbeads (MCMBs), mesophase pitch-based carbon fibers (MPCFs), a block-like graphitized artificial graphite, a powder-like graphitized artificial graphite, or the like, and may be an artificial graphite having a sphericity of 0.7 or more, 0.8 or more, or 0.83 or more, preferably.

The artificial graphite may be provided as primary particles, or secondary particles formed by agglomeration of a plurality of the primary particles.

The primary particles of artificial graphite may have a D50 of 6-15 µm, particularly, 6-10 µm, and more particularly, 6-9 µm. When the primary particles satisfy the above-defined range, they may be formed to such a degree that the primary particles may be highly graphitized, and the negative electrode active material particles ensure a suitable orientation index to provide improved quick charging performance.

As used herein, 'particle diameter, Dn' means a particle diameter corresponding to n% of the accumulated particle number distribution depending on particle diameter. Therefore, 'D50' means a particle diameter corresponding to 50% of the accumulated particle number distribution depending on particle diameter, 'D90' means a particle diameter corresponding to 90% of the accumulated particle number distribution depending on particle diameter, and 'D10' means a particle diameter corresponding to 10% of the accumulated particle number distribution depending on particle diameter.

In addition, Dn may be determined by using a laser diffraction method. Particularly, a powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then a particle size distribution is calculated. Then, the particle diameter at each point of 10%, 50% and 90% of the accumulated particle number distribution depending on particle diameter is calculated to determine each of D10, D50 and D90.

In the particle size distribution, the artificial graphite (primary particles) may have a half-width of 6-12.5 µm, particularly 7-12 µm, and more particularly, 8-11 µm. When the half-width satisfies the above-defined range of equal to or larger than 6 µm, it is possible to prevent a micropowder from being removed excessively, and thus to facilitate smooth granulation of the primary particles into secondary particles subsequently. Therefore, the resultant secondary particles have improved structural stability, resulting in improvement of the high-temperature storage characteristics of a battery, or the like. In addition, when the half-width satisfies the above-defined range of equal to or smaller than 12.5 µm, pores are formed uniformly in the negative electrode to inhibit an increase in pore resistance of the negative electrode, thereby providing a battery with improved quick charging performance. In addition, detachment of micropowder from the negative electrode is inhibited to improve the high-temperature storage characteristics of a battery. Further, in this case, since there is no need for using a large amount of pitch and/or carbon precursor to inhibit detachment of micropowder, it is possible to prevent the problem of a decrease in battery capacity. Herein, the term 'half-width' means the transverse width of the highest peak in the particle size distribution at the position corresponding to a half of the longitudinal maximum value of the peak.

In the particle size distribution, the primary particles of artificial graphite may have a Dmax of 15-44 µm, particularly 16-34 µm, and more particularly, 17-29 µm. When the above-defined range is satisfied, the primary particles generally have a small particle size to facilitate diffusion of lithium ions in the negative electrode active material particles.

In the particle size distribution, the primary particles of artificial graphite may have a Dmin of 1.0-5.0 µm, particularly 1.3-4.6 µm, and more particularly, 1.7-4.0 µm. When the above-defined range is satisfied, a micropowder may be removed suitably to improve the negative electrode adhesion, high-temperature storage characteristics and quick charging performance of a battery.

The secondary particles of artificial graphite may be formed by granulation of the primary particles. In other words, the secondary particles may be a structure formed by agglomeration of the primary particles among themselves through a granulation process. The secondary particles may include a carbonaceous matrix which allows agglomeration of the primary particles. The carbonaceous matrix may include at least one of soft carbon and graphite. Herein, soft carbon may be formed by heat treatment of pitch.

The carbonaceous matrix may be present in an amount of 8-16 wt%, particularly 9-12 wt%, in the secondary particles. The above-defined range is smaller than the content of a carbonaceous matrix used in conventional secondary particles of artificial graphite. This is because since the particle size of the primary particles in the secondary particles is controlled, structurally stabilized secondary particles may be obtained even with a small content of carbonaceous matrix, and the amount of the primary particles forming the secondary particles may be uniform.

The secondary particles of artificial graphite may include a carbon coating layer on the surfaces thereof, wherein the carbon coating layer may include at least one of amorphous carbon and crystalline carbon.

The crystalline carbon may further improve the conductivity of the negative electrode active material. The crystalline carbon may include at least one selected from the group consisting of fullerene, carbon nanotubes and graphene.

The amorphous carbon maintains the strength of the coating layer suitably to inhibit swelling of artificial graphite. The amorphous carbon may be a carbide of at least one selected from the group consisting of tar, pitch and other organic materials, or a carbonaceous material formed by using hydrocarbon gas as a source for a chemical vapor deposition (CVD) process.

The carbides of other organic materials may include a carbide of an organic material selected from carbides of sucrose, glucose, galactose, fructose, lactose, mannose, ribose, aldohexose, ketohexose and combinations thereof.

The hydrocarbon may be a substituted or non-substituted aliphatic or alicyclic hydrocarbon, or a substituted or non-substituted aromatic hydrocarbon. The aliphatic or alicyclic hydrocarbon of the substituted or non-substituted aliphatic or aliphatic hydrocarbon may include methane, ethane, ethylene, acetylene, propane, butane, butene, pentane, isobutane or hexane. The aromatic hydrocarbon of the substituted or non-substituted hydrocarbon may include benzene, toluene, xylene, styrene, ethylbenzene, diphenylmethane, naphthalene, phenol, cresol, nitrobenzene, chlorobenzene, indene, coumarone, pyridine, anthracene or phenanthrene.

The carbon coating layer may be present in an amount of 0.5-5.0 wt%, particularly 1-4 wt%, based on the total weight of the secondary particles of artificial graphite. When the above-defined range is satisfied, it is possible to improve the conductivity of the negative electrode active material particles, while ensuring the capacity per unit weight of the negative electrode active material particles.

The secondary particles of artificial graphite may have a D50 of 10-25 µm, particularly 12-22 µm, and more particularly, 13-20 µm. When the above-defined range is satisfied, the secondary particles of artificial graphite may be dispersed homogeneously in a slurry, and the battery may be provided with improved charging performance.

The secondary particles of artificial graphite may have a tap density of 0.85-1.30 g/cc, particularly 0.90-1.10 g/cc, and more particularly, 0.90-1.07 g/cc. When the above-defined range is satisfied, the secondary particles of artificial graphite may be packed smoothly in the negative electrode, thereby providing improved negative electrode adhesion.

In the negative electrode according to the present disclosure, when the first active material contained in the lower layer region and the second active material contained in the upper layer region are different from each other in terms of average particle diameter and shape, an intermixing region in which such different types of active materials are mixed may be present at the portion where the lower layer region is in contact with the upper layer region. This is because when the slurry for a lower layer containing the first active material and the slurry for an upper layer containing the second active material are coated at the same time or continuously with a very short time interval, and then dried at the same time to form a negative electrode active material layer, a certain intermixing zone is generated at the interface where the slurry for a lower layer is in contact with the slurry for an upper layer before drying, and then the intermixing zone is formed in the shape of a layer of intermixing region, while the slurry for a lower layer and the slurry for an upper layer are dried subsequently.

According to an embodiment of the present disclosure, an artificial graphite in the lower layer region of the active material layer and an artificial graphite in the upper layer region of the active material layer may have the same or different physical properties, such as average particle diameter and tap density.

According to an embodiment of the present disclosure, the weight ratio of an artificial graphite in the lower layer region of the active material layer to an artificial graphite in the upper layer region of the active material layer may be 25:75-50:50, particularly 37.5:62.5-50:50. When the weight ratio satisfies the above-defined range, it is possible to ensure improvement of adhesion even with the use of a minimized amount of single-walled carbon nanotubes in the lower layer region, and to maximize the quick charging performance of artificial graphite, while not using single-walled carbon nanotubes in the upper layer region.

In the active material layer of the negative electrode according to the present disclosure, the weight ratio (or loading amount per unit area) of the lower layer region to the upper layer region may be 25:75-50:50, particularly 37.5:62.5-50:50.

Herein, when the weight ratio of the lower layer region to the upper layer region satisfies the above-defined range, it is possible to ensure improvement of adhesion even with the use of a minimized amount of single-walled carbon nanotubes in the lower layer region, and to maximize the quick charging performance of artificial graphite, while not using single-walled carbon nanotubes in the upper layer region.

The weight percentage (wt%) of the first binder polymer in the lower layer region may be equal to or larger than the weight percentage (wt%) of the second binder polymer in the upper layer region.

Particularly, the weight percentage (wt%) of the first binder polymer in the lower layer region may be 1.0-4.2 times, 1.5-3.6 times, or 1.5-3 times of the weight percentage (wt%) of the second binder polymer in the upper layer region.

Herein, when the ratio of the weight percentage (wt%) of the first binder polymer in the lower layer region to the weight percentage (wt%) of the second binder polymer in the upper layer region satisfies the above-defined range, the binder of the lower layer region is present in an adequate amount (not an excessively small amount) to prevent detachment of the electrode layer, and the binder of the upper layer region is present in an adequate amount (not an excessively large amount) to reduce the resistance in the upper layer portion of the electrode and to provide improved quick charging performance.

According to an embodiment of the present disclosure, the ratio (wt%) of the first binder polymer in the lower layer of the negative electrode active material layer may be 2-5 wt%, 2-4.5 wt%, or 2.8-4.2 wt%, and the ratio (wt%) of the second binder polymer in the upper layer of the negative electrode active material layer may be 0.5-2 wt%, or 1-1.8 wt%.

According to an embodiment of the present disclosure, the total ratio (wt%) of the first binder polymer and the second binder polymer in the whole of the negative electrode active material layer may be 1-3 wt%, or 2.0-2.8 wt%.

According to an embodiment of the present disclosure, the negative electrode current collector used as a substrate for forming the negative electrode active material layer is not particularly limited, as long as it has conductivity, while not causing any chemical change in the corresponding battery. For example, copper, stainless steel, aluminum, nickel, titanium, baked carbon, copper or stainless steel surface-treated with carbon, nickel, titanium, silver, etc., aluminum-cadmium alloy, or the like, may be used.

Although the current collector is not particularly limited in its thickness, it may have a currently used thickness of 3-500 µm.

Particular examples of each of the first binder polymer and the second binder polymer may include various types of polymers, such as polyvinylidene fluoride-cohexafluoropropylene (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, styrene butadiene rubber (SBR), fluororubber, various copolymers, or the like.

In addition, a part of the binder polymer may function as a thickener which increases the viscosity of active material slurry to improve the dispersion properties of the active material and single-walled carbon nanotubes. Particular examples of each of the first thickener contained in the lower layer region and the second thickener container in the upper layer region may independently include carboxymethyl cellulose (CMC), carboxyethyl cellulose, polyvinyl pyrrolidone, or the like.

The lower layer region of the active material layer includes single-walled carbon nanotubes, while the upper layer region of the active material layer includes no single-walled carbon nanotubes.

The single-walled carbon nanotube is a material including carbon atoms arranged in a hexagonal shape and forming a tube-like shape, shows properties as a non-conductor, conductor or semi-conductor depending on its unique chirality, provides a tensile strength approximately 100 times higher than the tensile strength of steel by virtue of the carbon atoms linked through strong covalent binding, realizes excellent flexibility and elasticity, and is chemically stable.

The single-walled carbon nanotubes may have an average diameter of 0.5-15 nm. According to an embodiment of the present disclosure, the single-walled carbon nanotubes may have an average diameter of 1-10 nm, 1-5 nm, or 1-2 nm. When the single-walled carbon nanotubes satisfy the above-defined range of average diameter, it is possible to retain the conductivity of the negative electrode even in the presence of a significantly small amount of single-walled carbon nanotubes, and to realize a preferred level of viscosity and solid content upon the preparation of a conductive material dispersion. The single-walled carbon nanotubes may be entangled with one another to form an aggregate in the conductive material dispersion. Thus, the average diameter may be calculated by determining the diameter of such optional entangled single-walled carbon nanotube aggregate extracted from the conductive material dispersion through scanning electron microscopy (SEM) or transmission electron microscopy (TEM), and dividing the diameter of the aggregate by the number of single-walled carbon nanotubes forming the aggregate.

The single-walled carbon nanotubes may have a BET specific surface area of 500-1,500 m²/g, particularly 900-1,200 m²/g, or 250-330 m²/g. When the above-defined range is satisfied, a conductive material dispersion having a desired solid content is derived, and an excessive increase in viscosity of negative electrode slurry is prevented. The BET specific surface area may be determined through the nitrogen adsorption BET method.

The single-walled carbon nanotubes may have an aspect ratio of 50-20,000, or the single-walled carbon nanotubes may have a length of 5-100 µm, or 5-50 µm. When the above-defined range of aspect ratio or length is satisfied, the single-walled carbon nanotubes have a high specific surface area, and thus may be adsorbed to the active material particles with strong attraction force in the negative electrode. Therefore, a conductive network may be maintained smoothly even under the volumetric swelling of the negative electrode active material. The aspect ratio may be determined by calculating the average of the aspect ratios of 15 single-walled carbon nanotubes having a large aspect ratio and 15 single-walled carbon nanotubes having a small aspect ratio.

Since the single-walled carbon nanotubes have a larger aspect ratio, a larger length and a larger volume, as compared to multi-walled carbon nanotubes or double-walled carbon nanotubes, they are advantageous in terms of construction of an electrical network with the use of a small amount.

The content of the single-walled carbon nanotubes may be 0.003-0.07 parts by weight, based on 100 parts by weight of the lower layer region of the negative electrode active material layer. According to an embodiment of the present disclosure, the content of the single-walled carbon nanotubes may be 0.005-0.045 parts by weight, 0.010-0.040 parts by weight, or 0.015-0.030 parts by weight, based on 100 parts by weight of the lower layer region of the negative electrode active material layer.

When the content of the single-walled carbon nanotubes satisfies the above-defined range, it is possible to construct an electrical network sufficiently, while not causing degradation of the efficiency.

Optionally, at least one of the lower layer region and the upper layer region may further include a conductive material, besides the single-walled carbon nanotubes. The conductive material is not particularly limited, as long as it has conductivity, while causing no chemical change in the corresponding battery. Particular examples of the conductive material include: carbon black, such as carbon black, acetylene black, Ketjen black, channel black, furnace black, lamp black or thermal black; conductive fibers, such as carbon fibers or metallic fibers; metal powder, such as fluorocarbon, aluminum or nickel powder; conductive whisker, such as zinc oxide or potassium titanate; conductive metal oxide, such as titanium oxide; and conductive materials, such as polyphenylene derivatives.

In another aspect of the present disclosure, there is provided a method for manufacturing the above-described negative electrode, the method including the steps of:
preparing a slurry for a lower layer containing an artificial graphite, a first binder polymer, single-walled carbon nanotubes and a first dispersion medium, and a slurry for an upper layer containing an artificial graphite, a second binder polymer and a second dispersion medium and including no single-walled carbon nanotubes (SWCNTs);
coating the slurry for a lower layer on one surface of a negative electrode current collector, and coating the slurry for an upper layer on the slurry for a lower layer, at the same time or with a predetermined time interval; and
drying the coated slurry for a lower layer and slurry for an upper layer at the same time to form an active material layer,
wherein the content of the single-walled carbon nanotubes is 0.003-0.07 parts by weight based on 100 parts by weight of the total solid content of the slurry for a lower layer, and the single-walled carbon nanotubes have an average diameter of 0.5-15 nm.

The active material (artificial graphite), binder polymer (first binder polymer, second binder polymer), optionally used thickener (first thickener, second thickener) contained in each of the slurry for a lower layer and the slurry for an upper layer, and single-walled carbon nanotubes contained merely in the slurry for a lower layer are the same as described above.

Each of the first dispersion medium and the second dispersion medium may independently include N-methyl pyrrolidone, acetone, water, or the like.

Herein, the lower layer region of the negative electrode active material layer according to the present disclosure is formed from the coated slurry for a lower layer, and the upper layer region of the negative electrode active material layer according to the present disclosure is formed from the coated slurry for an upper layer.

In the active material layer of the negative electrode according to the present disclosure, the thickness of each of the lower layer region and the upper layer region may not be perfectly the same as the thickness of each of the coated slurry for a lower layer and the coated slurry for an upper layer. However, after carrying out a drying process or an optional pressing process, the thickness ratio of the lower layer region to the upper layer region of the active material layer in the finished negative electrode according to the present disclosure may be the same as the thickness ratio of the coated slurry for a lower layer to the coated slurry for an upper layer.

According to an embodiment of the present disclosure, the slurry for a lower layer is coated, and the slurry for an upper layer is coated on the slurry for a lower layer at the same time or with a predetermined interval. According to an embodiment of the present disclosure, the time interval may be 0.6 sec. or less, 0.02-0.6 sec., 0.02-0.06 sec., or 0.02-0.03 sec. The time interval between the coating of the slurry for a lower layer and the coating of the slurry for an upper layer is generated due to a coating system, and it is preferred that the slurry for a lower layer and the slurry for an upper layer are coated at the same time. The slurry for an upper layer may be coated on the slurry for a lower layer by using a device, such as a double slot die.

The step of forming an active material layer may further include a step of pressing the active material layer after the drying step. Herein, the pressing may be carried out by using a method, such as roll pressing, used conventionally in the art. For example, the pressing may be carried out under a pressure of 1-20 MPa at a temperature of 15-30°C.

The step of drying the coated slurry for a lower layer and the coated slurry for an upper layer at the same time to form an active material layer may be carried out by using a system including a combination of a hot-air drying device with an IR drying device in a manner used conventionally in the art.

The weight percentage (wt%) of the first binder polymer in the solid content of the slurry for a lower layer may be equal to or larger than the weight percentage (wt%) of the second binder polymer in the solid content of the slurry for an upper layer. According to an embodiment of the present disclosure, the weight percentage (wt%) of the first binder polymer in the solid content of the slurry for a lower layer may be 1.0-4.2 time, 1.5-3.6 times, or 1.5-3 times larger than the weight percentage (wt%) of the second binder polymer in the solid content of the slurry for an upper layer.

Herein, when the ratio of the weight percentage (wt%) of the first binder polymer in the coated slurry for a lower layer to the weight percentage (wt%) of the second binder polymer in the coated slurry for an upper layer satisfies the above-defined range, the binder of the lower layer region is present in an adequate amount (not an excessively small amount) to prevent detachment of the electrode layer, and the binder of the upper layer region is present in an adequate amount (not an excessively large amount) to reduce the resistance in the upper layer portion of the electrode and to provide improved quick charging performance.

The ratio (wt%) of the first binder polymer in the solid content of the slurry for a lower layer may be 2-5 wt%, 2-4.5 wt%, or 2.8-4.2 wt%, and the ratio (wt%) of the second binder polymer in the solid content of the slurry for an upper layer may be 0.5-2 wt%, or 1-1.8 wt%.

The total ratio (wt%) of the first binder polymer and the second binder polymer in the total solid content of the slurry for a lower layer and the slurry for an upper layer may be 1-3 wt%, or 2.0-2.8 wt%.

In still another aspect of the present disclosure, there is provided a lithium secondary battery including the negative electrode obtained as described above. Particularly, the lithium secondary battery may be obtained by injecting a lithium salt-containing electrolyte to an electrode assembly including a positive electrode, the negative electrode as described above and a separator interposed between both electrodes.

The positive electrode may be obtained by mixing a positive electrode active material, a conductive material, a binder and a solvent to form a slurry, and coating the slurry directly onto a metal current collector, or casting the slurry onto a separate support, peeling a positive electrode active material film from the support and laminating the film on a metal current collector.

The positive electrode active material used in the positive electrode active material layer may be any one active material particle selected from the group consisting of LiCoO₂, LiNiO₂, LiMn₂O₄, LiCoPO₄, LiFePO₄ and LiNi_{1-x-y-z}CoₓM1_{y}M2_{z}O₂ (wherein each of M1 and M2 independently represents any one selected from the group consisting of Al, Ni, Co, Fe, Mn, V, Cr, Ti, W, Ta, Mg and Mo, each of x, y and z independently represents the atomic ratio of an element forming oxide, and 0 ≤ x < 0.5, 0 ≤ y < 0.5, 0 ≤ z < 0.5, and 0 < x + y + z ≤ 1), or a mixture of at least two of them.

Meanwhile, the same conductive material, binder and solvent as used for manufacturing the negative electrode may be used.

The separator may be a conventional porous polymer film used conventionally as a separator. For example, the porous polymer film may be a porous polymer film made of a polyolefinic polymer, such as ethylene homopolymer, propylene homopolymer, ethylene-butene copolymer, ethylene/hexene copolymer or ethylene/methacrylate copolymer. Such a porous polymer film may be used alone or in the form of a laminate. In addition, an insulating thin film having high ion permeability and mechanical strength may be used. The separator may include a safety reinforced separator (SRS) including a ceramic material coated on the surface of the separator to a small thickness. In addition, a conventional porous non-woven web, such as non-woven web made of high-melting point glass fibers or polyethylene terephthalate fibers, may be used, but the scope of the present disclosure is not limited thereto.

The electrolyte includes a lithium salt as an electrolyte salt and an organic solvent for dissolving the lithium salt.

Any lithium salt used conventionally for an electrolyte for a secondary battery may be used with no particular limitation. For example, the anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The organic solvent contained in the electrolyte may be any organic solvent used conventionally without particular limitation. Typical examples of the organic solvent include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulforan, gamma-butyrolactone, propylene sulfite, and tetrahydrofuran.

Particularly, among the carbonate-based organic solvents, ethylene carbonate and propylene carbonate, which are cyclic carbonates, are organic solvents having a high viscosity and a high dielectric constant, and thus may be used preferably, since they can dissociate the lithium salt in the electrolyte with ease. When such a cyclic carbonate is used after mixing it with a linear carbonate having a low viscosity and a low dielectric constant, such as dimethyl carbonate or diethyl carbonate, it is possible to prepare an electrolyte having higher electrical conductivity, more preferably.

Optionally, the electrolyte used according to the present disclosure may further include additives contained in the conventional electrolyte, such as an overcharge-preventing agent, or the like.

The lithium secondary battery according to an embodiment of the present disclosure may be obtained by interposing the separator between the positive electrode and the negative electrode to form an electrode assembly, introducing the electrode assembly to a pouch, a cylindrical battery casing or a prismatic battery casing, and then injecting the electrolyte thereto to finish a secondary battery. In a variant, the lithium secondary battery may be obtained by stacking the electrode assemblies, impregnating the stack with the electrolyte, and introducing the resultant product to a battery casing, followed by sealing.

According to an embodiment of the present disclosure, the lithium secondary battery may be a stacked, wound, stacked and folded or cable type battery.

The lithium secondary battery according to the present disclosure may be used for a battery cell used as a power source for a compact device, and may be used preferably as a unit battery for a medium- or large-size battery module including a plurality of battery cells. Particular examples of such medium- or large-size devices include electric vehicles, hybrid electric vehicles, plug-in hybrid electric vehicles, power storage systems, or the like. Particularly, the lithium secondary battery may be useful for batteries for hybrid electric vehicles and new & renewable energy storage batteries, requiring high output.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1: Manufacture of Negative Electrode and Lithium Secondary Battery

### <Manufacture of Negative Electrode>

First, 94.9 parts by weight of artificial graphite having a D50 of 16.7 µm and a tap density of 0.91 g/cc, 0.995 parts by weight of carbon black and 0.005 parts by weight of single-walled carbon nanotubes (SWCNTs) having an average diameter of 1 nm as conductive materials, and 3.0 parts by weight of styrene butadiene rubber (SBR) and 1.1 parts by weight of carboxymethyl cellulose (CMC) as a first binder polymer were mixed, and water as a first dispersion medium was added thereto to prepare a slurry for a lower layer. Herein, the slurry for a lower layer had a solid content of 48 wt%.

Next, 94.9 parts by weight of artificial graphite having a D50 of 16.7 µm and a tap density of 0.91 g/cc, 1.0 parts by weight of carbon black as a conductive material, and 3.0 parts by weight of styrene butadiene rubber (SBR) and 1.1 parts by weight of carboxymethyl cellulose (CMC) as a second binder polymer were mixed, and water as a second dispersion medium was added thereto to prepare a slurry for a upper layer. Herein, the slurry for a upper layer had a solid content of 49 wt%.

The slurry for a lower layer was coated on one surface of copper (Cu) foil as a negative electrode current collector having a thickness of 10 µm, while the slurry for an upper layer was coated on the slurry for a lower layer at the same time, by using a double slot die. Herein, the loading amount of the slurry for a lower layer and that of the slurry for an upper layer were 0.0053 mg/cm² and 0.0053 mg/cm², respectively.

Then, the coated slurry for a lower layer and the coated slurry for an upper layer were dried at the same time by using a system based on a combination of hot air drying with IR drying to form an active material layer.

Particularly, the drying chamber of the drying system has ten drying zones from the first drying zone, where the slurry-coated current collector is introduced to the drying system for the first time, to the tenth drying zone. From the first drying zone to the third drying zone, 8 hot air dryers are disposed and IR heaters are disposed between two adjacent hot air dryers, and thus total 8 IR heaters are provided. In addition, from the fourth drying zone to the sixth drying zone, the hot air flow of the hot air driers is controlled so that it may run from the top to the bottom. Further, from the seventh drying zone to the tenth drying zone, hot air dryers, in which hot air flow runs from the top to the bottom, and hot air dryers, in which hot air flow runs from the bottom to the top, are disposed alternately.

In the drying system, a stage was disposed on the bottom surface of the slurry-coated current collector (electrode sheet) to transport the slurry-coated current collector, wherein the slurry-coated current collector was transported at a rate of 50 m/min. The air-supplying fan for forming the flow of air supply from the outside of the drying system was operated at a rate of 1000 rpm, and the air-venting fan forming the flow of air vent from the inside of the drying chamber was operated at a rate of 1000 rpm. The temperature of the hot air dryers in each drying zone was as follows: 140°C in the first drying zone, 130°C in the second drying zone, 120°C from the third to the eighth drying zones, 90°C in the ninth drying zone, and 50°C in the tenth drying zone.

Since the IR heaters installed in the first to the third drying zones emit near infrared rays having a wavelength of 0.7 µm, and the irradiation length of the IR heater is 30 cm per heater (the length of a lamp irradiating near IR rays from the IR heater is 30 cm), 24 IR heaters are disposed throughout the three drying zone at a constant interval (24 IR heaters were disposed in the three drying zones, 8 IR heaters per drying zone). Herein, only 3 IR heaters were used among the total 24 IR heaters, while maintaining a constant interval. In other words, the IR heaters were operated at an efficiency of 12.5% based on the efficiency obtained when all of the IR heaters are used.

The formed upper layer region and lower layer region active material layers were pressed through roll pressing to obtain a negative electrode provided using an upper layer region/lower layer region bilayer structured active material layer having a thickness of 78 µm.

### <Manufacture of Lithium Secondary Battery>

An electrolyte was prepared by dissolving LiPF₆ in an organic solvent containing ethylene carbonate (EC) mixed with ethyl methyl carbonate (EMC) at a volume ratio of 3:7 to a concentration of 1.0 M, and dissolving 0.5 wt% of vinylene carbonate (VC) as an additive therein.

A porous polyethylene separator was interposed between the negative electrode obtained as described above and a lithium counter electrode, and the electrolyte was injected thereto to obtain a coin-type half-cell secondary battery.

### Example 2: Manufacture of Negative Electrode and Lithium Secondary Battery

A negative electrode and a secondary battery were obtained in the same manner as Example 1, except that the conductive material added to the slurry for a lower layer was changed into 0.005 parts by weight of single-walled carbon nanotubes (SWCNTs) having an average diameter of 10 nm.

### Example 3: Manufacture of Negative Electrode and Lithium Secondary Battery

A negative electrode and a secondary battery were obtained in the same manner as Example 1, except that the conductive material added to the slurry for a lower layer was changed into 0.955 parts by weight of carbon black and 0.045 parts by weight of single-walled carbon nanotubes (SWCNTs) having an average diameter of 1 nm.

### Example 4: Manufacture of Negative Electrode and Lithium Secondary Battery

A negative electrode and a secondary battery were obtained in the same manner as Example 1, except that the conductive material added to the slurry for a lower layer was changed into 0.955 parts by weight of carbon black and 0.045 parts by weight of single-walled carbon nanotubes (SWCNTs) having an average diameter of 10 nm.

### Example 5: Manufacture of Negative Electrode and Lithium Secondary Battery

A negative electrode and a secondary battery were obtained in the same manner as Example 3, except that 95.4 parts by weight of artificial graphite, and 2.5 parts by weight of styrene butadiene rubber (SBR) as a first binder polymer were added to the slurry for a lower layer.

### Comparative Example 1: Manufacture of Negative Electrode and Lithium Secondary Battery

First, 94.9 parts by weight of artificial graphite having a D50 of 16.7 µm and a tap density of 0.91 g/cc, 1.0 parts by weight of carbon black as a conductive material, and 3.0 parts by weight of styrene butadiene rubber (SBR) and 1.1 parts by weight of carboxymethyl cellulose (CMC) as a first binder polymer were mixed, and water as a dispersion medium was added thereto to prepare a slurry having a solid content of 49 wt%,

The slurry was coated on one surface of copper (Cu) foil as a negative electrode current collector having a thickness of 10 µm. Herein, the loading amount of the slurry was 0.0105 mg/cm².

Then, the coated slurry was dried by using the same drying system as Example 1 based on a combination of hot air drying with IR drying to form a monolayer structured active material layer. After that, the formed active material layer was pressed through roll pressing to obtain a negative electrode provided with an active material layer having a thickness of 78 µm.

A secondary battery was obtained in the same manner as Example 1, except that the negative electrode obtained as described above was used.

### Comparative Example 2: Manufacture of Negative Electrode and Lithium Secondary Battery

A negative electrode and a secondary battery were obtained in the same manner as Comparative Example 1, except that the conductive material added to the slurry was changed into 0.005 parts by weight of single-walled carbon nanotubes (SWCNTs) having an average diameter of 1.0 nm.

### Comparative Example 3: Manufacture of Negative Electrode and Lithium Secondary Battery

A negative electrode and a secondary battery were obtained in the same manner as Example 1, except that the conductive material added to the slurry for a lower layer was changed into 0.998 parts by weight of carbon black and 0.002 parts by weight of single-walled carbon nanotubes (SWCNTs) having an average diameter of 1.0 nm.

### Comparative Example 4: Manufacture of Negative Electrode and Lithium Secondary Battery

A negative electrode and a secondary battery were obtained in the same manner as Example 1, except that the conductive material added to the slurry for a lower layer was changed into 0.998 parts by weight of carbon black and 0.002 parts by weight of single-walled carbon nanotubes (SWCNTs) having an average diameter of 10 nm.

### Comparative Example 5: Manufacture of Negative Electrode and Lithium Secondary Battery

A negative electrode and a secondary battery were obtained in the same manner as Example 1, except that the conductive material added to the slurry for a lower layer was changed into 0.9 parts by weight of carbon black and 0.1 parts by weight of single-walled carbon nanotubes (SWCNTs) having an average diameter of 10 nm.

### Comparative Example 6: Manufacture of Negative Electrode and Lithium Secondary Battery

A negative electrode and a secondary battery were obtained in the same manner as Example 1, except that the conductive material added to the slurry for a lower layer was changed into 0.955 parts by weight of carbon black and 0.045 parts by weight of carbon nanotubes (CNTs) having an average diameter of 20 nm.

### Comparative Example 7: Manufacture of Negative Electrode and Lithium Secondary Battery

A negative electrode and a secondary battery were obtained in the same manner as Example 1, except that the conductive material added to the slurry for a lower layer was changed into 0.7 parts by weight of carbon black and 0.3 parts by weight of carbon nanotubes (CNTs) having an average diameter of 20 nm.

### Comparative Example 8: Manufacture of Negative Electrode and Lithium Secondary Battery

A negative electrode and a secondary battery were obtained in the same manner as Example 1, except that each of the conductive material added to the slurry for a lower layer and the conductive material added to the slurry for an upper layer was changed into 0.955 parts by weight of carbon black and 0.005 parts by weight of carbon nanotubes (CNTs) having an average diameter of 1 nm.

### Comparative Example 9: Manufacture of Negative Electrode and Lithium Secondary Battery

A negative electrode and a secondary battery were obtained in the same manner as Comparative Example 1, except that the slurry was prepared by using 0.955 parts by weight of carbon black and 0.045 parts by weight of carbon nanotubes (CNTs) having an average diameter of 10 nm, as conductive materials.

### Comparative Example 10: Manufacture of Negative Electrode and Lithium Secondary Battery

A negative electrode and a secondary battery were obtained in the same manner as Example 3, except that the slurry for a lower layer and the slurry for an upper layer of Example 3 were used, with the proviso that the upper layer and the lower layer were reversed. Particularly, the same slurry for a lower layer and slurry for an upper layer as Example 3 were used, wherein the slurry for an upper layer was coated on one surface of copper (Cu) foil as a negative electrode current collector having a thickness of 10 µm, while the slurry for a lower layer was coated on the slurry for an upper layer at the same time, by using a double slot die. Herein, the loading amount of the slurry for a lower layer and that of the slurry for an upper layer were 0.0053 mg/cm² and 0.0053 mg/cm², respectively.

### Method for Determining Average Diameter of Single-Walled Carbon Nanotubes

A transmission electron microscope (TEM) (Model name: H7650, available from HITACHI) was used to take a microscopic image at a magnification of 150,000 or more, and the average diameter of single-walled carbon nanotubes observed in an optionally sampled region in the image was determined. Herein, at least 10 single-walled carbon nanotubes were determined and the average diameter thereof was calculated.

### Evaluation of Quick Charging Performance of Secondary Battery

Lithium (Li) metal foil cut into a circular shape with a size of 1.7671 cm² was used as a positive electrode. A porous polyethylene separator was interposed between the positive electrode and each of the negative electrodes (each of the negative electrodes according to Examples 1-5 and Comparative Examples 1-10), and an electrolyte, prepared by dissolving vinylene carbonate (VC) in an organic solvent containing ethyl methyl carbonate (EMC) mixed with ethylene carbonate (EC) at a volume ratio of 7:3 to 0.5 wt% and dissolving LiPF₆ at concentration of 1.0 M, was injected thereto to obtain a lithium coin half-cell.

The resultant half-cell was charged/discharged three times at 0.1 C, and charged in a constant current (CC) mode (3 C) for 15 minutes based on the discharge capacity of the third cycle as 1 C. During this, the output voltage depending on a change in state-of-charge (SOC) was plotted in a graph, wherein X axis represents SOC and Y axis represents the output voltage measurements. Then, a point of change in gradient was found through dV/dQ differentiation to determine the Li plating SOC. In this manner, quick charging performance was evaluated. The results are shown in the following Table 1.

### Evaluation of Negative Electrode Adhesion

Each of the negative electrodes according to Examples 1-5 and Comparative Examples 1-10 was evaluated in terms of negative electrode adhesion. The results are shown in the following Table 1.

The negative electrode was cut into a size of 20 mm x 150 mm and fixed at the central portion of 25 mm x 75 mm slide glass by using a tape. Then, the current collector was peeled by using a UTM and the 90° peel strength was measured. The 90° peel strength was measured five times or more, and the average value was taken as adhesion.

**[Table 1]**

| | 3.0 C Li plating SOC (%) | Adhesion (gf/10mm) |
|---|---|---|
| Ex. 1 | 34 | 23 |
| Ex. 2 | 34 | 20 |
| Ex. 3 | 34 | 30 |
| Ex. 4 | 34 | 22 |
| Ex. 5 | 37 | 18 |
| Comp. Ex. 1 | 34 | 17 |
| Comp. Ex. 2 | 29 | 23 |
| Comp. Ex. 3 | 34 | 18 |
| Comp. Ex. 4 | 34 | 17 |
| Comp. Ex. 5 | 34 | 18 |
| Comp. Ex. 6 | 34 | 17 |
| Comp. Ex. 7 | 34 | 19 |
| Comp. Ex. 8 | 29 | 22 |
| Comp. Ex. 9 | 31 | 22 |
| Comp. Ex. 10 | 30 | 17 |

Referring to Table 1, each of the negative electrodes according to Examples 1-5 and the secondary battery using the same show a higher adhesion value and a significantly increased 3.0 C Li plating SOC value, as compared to Comparative Examples 1-10. Therefore, it can be seen that each of the secondary batteries according to Examples 1-5 provides significantly improved quick charging performance.

## Claims

1. A negative electrode, comprising:
a current collector; and
a negative electrode active material layer disposed on at least one surface of the current collector, and having a negative electrode active material layer containing an artificial graphite, single-walled carbon nanotubes (SWCNTs) and a binder polymer,
wherein the negative electrode active material layer comprises a lower layer region facing the current collector, and an upper layer region facing the lower layer region and extended to the surface of the negative electrode active material layer,
**characterized in that**
the content of the single-walled carbon nanotubes is 0.003-0.07 parts by weight based on 100 parts by weight of the lower layer region,
the single-walled carbon nanotubes have an average diameter of 0.5-15 nm as determined according to the description,
the upper layer region includes no single-walled carbon nanotubes (SWCNTs), and
wherein at least one of the lower layer region and the upper layer region further comprises a spheronized natural graphite.

2. The negative electrode according to claim 1, wherein the content of the single-walled carbon nanotubes is 0.005-0.045 parts by weight based on 100 parts by weight of the lower layer region.

3. The negative electrode according to claim 1, wherein the single-walled carbon nanotubes have the average diameter of 1-10 nm as determined according to the description.

4. The negative electrode according to claim 1, wherein at least one of the lower layer region and the upper layer region further comprises any conductive material other than single-walled carbon nanotubes.

5. A method for manufacturing the negative electrode as defined in claim 1, comprising the steps of:
preparing a slurry for a lower layer containing an artificial graphite, a first binder polymer, single-walled carbon nanotubes and a first dispersion medium, and a slurry for an upper layer containing an artificial graphite, a second binder polymer and a second dispersion medium and including no single-walled carbon nanotubes (SWCNTs);
coating the slurry for a lower layer on one surface of a negative electrode current collector, and coating the slurry for an upper layer on the slurry for a lower layer, at the same time or with a predetermined time interval; and
drying the coated slurry for a lower layer and slurry for an upper layer at the same time to form an active material layer,
wherein the content of the single-walled carbon nanotubes is 0.003-0.07 parts by weight based on 100 parts by weight of the total solid content of the slurry for a lower layer, and the single-walled carbon nanotubes have an average diameter of 0.5-15 nm as determined according to the description.

6. The method for manufacturing the negative electrode according to claim 5, wherein the content of the single-walled carbon nanotubes is 0.005-0.045 parts by weight based on 100 parts by weight of the lower layer region.

7. The method for manufacturing the negative electrode according to claim 5, wherein the single-walled carbon nanotubes have the average diameter of 1-10 nm as determined according to the description.

8. The method for manufacturing the negative electrode according to claim 5, wherein the slurry for a lower layer is coated on one surface of the negative electrode current collector, and the slurry for an upper layer is coated on the slurry for a lower layer, at the same time or with a time interval of 0.6 seconds or less.

9. A lithium secondary battery comprising the negative electrode as defined in any one of claims 1 to 4.

## Patentansprüche

1. Negative Elektrode, umfassend:
einen Stromkollektor; und
eine Negativelektrodenaktivmaterialschicht, die auf mindestens einer Oberfläche des Stromkollektors angeordnet ist und eine Negativelektrodenaktivmaterialschicht aufweist, die künstlichen Graphit, einwandige Kohlenstoffnanoröhren (SWCNTs) und ein Bindemittelpolymer enthält,
wobei die Negativelektrodenaktivmaterialschicht einen unteren Schichtbereich umfasst, der dem Stromkollektor zugewandt ist, und einen oberen Schichtbereich umfasst, der dem unteren Schichtbereich zugewandt ist und sich bis zur Oberfläche der Negativelektrodenaktivmaterialschicht erstreckt,
**dadurch gekennzeichnet, dass**
der Gehalt an einwandigen Kohlenstoffnanoröhren 0,003-0,07 Gewichtsteile, bezogen auf 100 Gewichtsteile des unteren Schichtbereichs, beträgt,
die einwandigen Kohlenstoffnanoröhren einen mittleren Durchmesser von 0,5-15 nm aufweisen, wie gemäß der Beschreibung bestimmt,
der obere Schichtbereich keine einwandigen Kohlenstoffnanoröhren (SWCNTs) enthält, und
wobei mindestens einer aus dem unteren Schichtbereich und dem oberen Schichtbereich ferner einen sphäronisierten Naturgraphit umfasst.

2. Negative Elektrode gemäß Anspruch 1, wobei der Gehalt an einwandigen Kohlenstoffnanoröhren 0,005-0,045 Gewichtsteile, bezogen auf 100 Gewichtsteile des unteren Schichtbereichs, beträgt.

3. Negative Elektrode gemäß Anspruch 1, wobei die einwandigen Kohlenstoffnanoröhren einen mittleren Durchmesser von 1-10 nm aufweisen, wie gemäß der Beschreibung bestimmt.

4. Negative Elektrode gemäß Anspruch 1, wobei mindestens einer aus dem unteren Schichtbereich und dem oberen Schichtbereich ferner ein beliebiges leitfähiges Material verschieden von den einwandigen Kohlenstoffnanoröhren umfasst.

5. Verfahren zur Herstellung der negativen Elektrode wie in Anspruch 1 definiert, umfassend die folgenden Schritte:
Herstellen einer Aufschlämmung für eine untere Schicht, die künstlichen Graphit, ein erstes Bindemittelpolymer, einwandige Kohlenstoffnanoröhren und ein erstes Dispersionsmedium enthält, und einer Aufschlämmung für eine obere Schicht, die künstlichen Graphit, ein zweites Bindemittelpolymer und ein zweites Dispersionsmedium enthält und keine einwandigen Kohlenstoffnanoröhren (SWCNTs) enthält;
Auftragen der Aufschlämmung für eine untere Schicht auf eine Oberfläche eines Negativelektrodenstromkollektors und Auftragen der Aufschlämmung für eine obere Schicht auf die Aufschlämmung für eine untere Schicht, gleichzeitig oder mit einem vorbestimmten Zeitintervall; und
gleichzeitiges Trocknen der aufgetragenen Aufschlämmung für eine untere Schicht und Aufschlämmung für eine obere Schicht, um eine Aktivmaterialschicht zu bilden,
wobei der Gehalt an einwandigen Kohlenstoffnanoröhren 0,003-0,07 Gewichtsteile, bezogen auf 100 Gewichtsteile des Gesamtfeststoffgehalts der Aufschlämmung für eine untere Schicht, beträgt und die einwandigen Kohlenstoffnanoröhren einen mittleren Durchmesser von 0,5-15 nm aufweisen, wie gemäß der Beschreibung bestimmt.

6. Verfahren zur Herstellung der negativen Elektrode gemäß Anspruch 5, wobei der Gehalt an einwandigen Kohlenstoffnanoröhren 0,005-0,045 Gewichtsteile, bezogen auf 100 Gewichtsteile des unteren Schichtbereichs, beträgt.

7. Verfahren zur Herstellung der negativen Elektrode gemäß Anspruch 5, wobei die einwandigen Kohlenstoffnanoröhren einen mittleren Durchmesser von 1-10 nm aufweisen, wie gemäß der Beschreibung bestimmt.

8. Verfahren zur Herstellung der negativen Elektrode gemäß Anspruch 5, wobei die Aufschlämmung für eine untere Schicht auf eine Oberfläche des Negativelektrodenstromkollektors aufgetragen wird und die Aufschlämmung für eine obere Schicht gleichzeitig oder mit einem Zeitintervall von 0,6 Sekunden oder weniger auf die Aufschlämmung für eine untere Schicht aufgetragen wird.

9. Lithium-Sekundärbatterie, umfassend die negative Elektrode gemäß mindestens einem der Ansprüche 1 bis 4.

## Revendications

1. Électrode négative, comprenant :
un collecteur de courant ; et
une couche de matériau actif d'électrode négative disposée sur au moins une surface du collecteur de courant, et comportant une couche de matériau actif d'électrode négative contenant un graphite artificiel, des nanotubes de carbone à paroi simple (SWCNT) et un polymère liant,
dans laquelle la couche de matériau actif d'électrode négative comprend une région de couche inférieure faisant face au collecteur de courant, et une région de couche supérieure faisant face à la région de couche inférieure et s'étendant jusqu'à la surface de la couche de matériau actif d'électrode négative,
**caractérisée en ce que**
la teneur en nanotubes de carbone à paroi simple est de 0,003 à 0,07 partie en poids pour 100 parties en poids de la région de couche inférieure,
les nanotubes de carbone à paroi simple ont un diamètre moyen de 0,5 à 15 nm, tel que déterminé selon la description,
la région de la couche supérieure ne comprend pas de nanotubes de carbone à paroi simple (SWCNT), et
dans laquelle au moins l'une de la région de la couche inférieure et de la région de la couche supérieure comprend en outre un graphite naturel sphéronisé.

2. L'électrode négative selon la revendication 1, dans laquelle la teneur en nanotubes de carbone à paroi simple est de 0,005 à 0,045 partie en poids pour 100 parties en poids de la région de la couche inférieure.

3. L'électrode négative selon la revendication 1, dans laquelle les nanotubes de carbone à paroi simple ont un diamètre moyen de 1 à 10 nm, tel que déterminé conformément à la description.

4. L'électrode négative selon la revendication 1, dans laquelle au moins l'une des régions de couche inférieure et de couche supérieure comprend en outre tout matériau conducteur autre que des nanotubes de carbone à paroi simple.

5. Procédé de fabrication de l'électrode négative telle que définie dans la revendication 1, comprenant les étapes suivantes :
préparation d'une suspension pour une couche inférieure contenant un graphite artificiel, un premier polymère liant, des nanotubes de carbone à paroi simple et un premier milieu de dispersion, et d'une suspension pour une couche supérieure contenant un graphite artificiel, un deuxième polymère liant et un deuxième milieu de dispersion et ne comprenant pas de nanotubes de carbone à paroi simple (SWCNT) ;
revêtement de la suspension pour une couche inférieure sur une surface d'un collecteur de courant d'électrode négative, et revêtement de la suspension pour une couche supérieure sur la suspension pour une couche inférieure, en même temps ou avec un intervalle de temps prédéterminé ; et
séchage de la suspension revêtue pour une couche inférieure et de la suspension pour une couche supérieure en même temps pour former une couche de matériau actif,
dans lequel la teneur en nanotubes de carbone à paroi simple est de 0, 003 à 0,07 partie en poids pour 100 parties en poids de la teneur totale en solides de la suspension pour une couche inférieure, et les nanotubes de carbone à paroi simple ont un diamètre moyen de 0,5 à 15 nm, tel que déterminé selon la description.

6. Le procédé de fabrication de l'électrode négative selon la revendication 5, dans lequel la teneur en nanotubes de carbone à paroi simple est de 0,005 à 0,045 partie en poids pour 100 parties en poids de la région de la couche inférieure.

7. Le procédé de fabrication de l'électrode négative selon la revendication 5, dans lequel les nanotubes de carbone à paroi simple ont un diamètre moyen de 1 à 10 nm, tel que déterminé conformément à la description.

8. Le procédé de fabrication de l'électrode négative selon la revendication 5, dans lequel la suspension pour une couche inférieure est appliquée sur une surface du collecteur de courant de l'électrode négative, et la suspension pour une couche supérieure est appliquée sur la suspension pour une couche inférieure, en même temps ou avec un intervalle de temps de 0,6 seconde ou moins.

9. Batterie secondaire au lithium comprenant l'électrode négative telle que définie dans l'une quelconque des revendications 1 à 4.
